# EUROPÄISCHE PATENTSCHRIFT

(11) **EP 0 884 199 B1**
(45) Veröffentlichungstag und Bekanntmachung des Hinweises auf die Patenterteilung: **11.08.2004**
(21) Anmeldenummer: 98109734.8
(22) Anmeldetag: 28.05.1998
(51) Int. Cl.: B60C 15/036

(54) **Radreifeneinheit und Felgenform dafür**
Tyre unit and its rim form
Bandage de roue et sa forme de jante

(30) Priorität: 14.06.1997 DE 19725224
(43) Veröffentlichungstag der Anmeldung: 16.12.1998
(73) Patentinhaber: Continental Aktiengesellschaft, 30165 Hannover (DE)
(72) Erfinder: Huinink, Heinrich, 30823 Garbsen (DE); Walloch, Frank, Dr., 31228 Peine (DE); Roik, Geert, 38162 Cremlingen (DE); Knopp, Roland, 30175 Hannover (DE)

(56) Entgegenhaltungen:
- DE-A- 3 144 326
- DE-A- 3 206 171
- FR-A- 2 562 842
- GB-A- 2 229 975
- US-A- 4 253 510
- US-A- 4 350 196

## Beschreibung

Die Erfindung betrifft eine Radreifeneinheit, mit einem Luftreifen ohne Wulstkerne und einer Felge, wobei die Ränder des Reifens mit der Felge stoffschlüssig, insbesondere durch Aufvulkanisieren, verbunden sind, und die Felge zumindest teilweise in einen Radkranz übergeht.

Die Erfindung betrifft weiter ein Scheibenrad für eine gattungsgemäße Radreifeneinheit. Schließlich betrifft die Erfindung eine Felgenform.

Bekannte Räder für Kraftfahrzeuge bestehen üblicherweise aus einem Scheibenrad, dessen äußerer Umfang in Form einer Felge mit zwei Felgenhörnern ausgebildet ist, die die seitliche Führung für zwei Wulstkerne eines Luftreifens bilden. Unter einem Scheibenrad ist ein Rad zu verstehen, bei dem Radkranz und eigentliche Felge ineinander übergehen, so daß auch die gesamte Einheit umgangssprachlich oft lediglich als "Felge" bezeichnet wird. Herkömmliche Luftreifen mit Wulstkernen sind aufwendig herzustellen und schwierig zu montieren. Die Felgen-Querschnittsform mit zwei Felgenhörnern ist bei herkömmlichen Kraftfahrzeugen häufig als sogenannte Tiefbettfelge ausgebildet, um eine Montage des Luftreifens zu ermöglichen, indem eine Seite des zu montierenden, aufgrund einer Stahldrahteinlage nicht dehnbaren Wulstes in das Tiefbett gedrückt wird.

Eine solche Konstruktion eines luftbereiften Rades ist vergleichsweise schwer. Die Entwicklung geht daher zu Radreifeneinheiten, d.h. Rädern, bei denen der Luftreifen ohne Wulstkerne ausgebildet ist und auf einer Felge stoffschlüssig befestigt ist, insbesondere durch Aufvulkanisieren oder Aufkleben.

Ein Beispiel für eine solche Radreifeneinheit ist aus der EP 0 255 539 B1 bekannt. Die dort beschriebene Radreifeneinheit weist eine vergleichsweise komplizierte Querschnittsform der Felge auf, was dazu führt, daß sich eine solche Felge und der mit ihr verbundene Radkranz nicht mit einfachen Fertigungsmethoden herstellen läßt. Insbesondere bei all den Fertigungsmethoden, die den Einsatz eines Stempels oder eines Gesenks erfordern, wie insbesondere das Tiefziehen von Stahlplatinen sowie die Fertigung von faserverstärkten Kunststoffteilen, ist bei herkömmlichen Felgen ein mehrteiliger Aufbau notwendig. Die einzelnen Teile eines solchen mehrteiligen Aufbaus werden miteinander verschweißt, verklebt o.ä.

Dies ist insbesondere insofern nachteilig, als Radreifeneinheiten nach Verschleiß des Laufstreifens des Reifens komplett entsorgt werden müssen, woraus sich die Erfordernis ableitet, Felge und Radkranz möglichst einfach und materialsparend aufzubauen.

Der Erfindung liegt daher die Aufgabe zugrunde, eine Radreifeneinheit so zu gestalten, daß eine möglichst einfache Fertigung von Felge und Radkranz möglich sind, wobei geeignete Anlageflächen für die durch Aufvulkanisieren oder Verkleben stoffschlüssig zu befestigenden Ränder eines Luftreifens geschaffen werden sollen.

Die Lösung der Aufgabe ist erfindungsgemäß bei einer Radreifeneinheit der gattungsgemäßen Art dadurch gekennzeichnet, daß Felge und Radkranz einstückig ausgeführt sind und jeder Radialschnitt eine unverzweigte Kurve ist, deren Krümmungen so gewählt sind, daß die Felgen-Radkranz-Einheit zu keiner der beiden Achsrichtungen hin Hinterschnitte aufweist.

Dabei ist bevorzugt vorgesehen, daß die Ränder des Reifens auf unterschiedlichen Seiten der unverzweigten, den Querschnitt der Felge beschreibenden Kurve aufvulkanisiert oder geklebt sind, wobei ein Rand des Luftreifens in einem Endbereich der den Querschnitt der Felge beschreibenden Kurve stoffschlüssig befestigt sein kann. Dabei ist bevorzugt vorgesehen, daß die den Querschnitt der Felge beschreibende Kurve von einem radial inneren Abschnitt aus betrachtet nach außen hin zunächst in eine Richtung gekrümmt ist, wodurch vorteilhaft eine Anlagefläche für einen Rand des zu befestigenden Luftreifens geschaffen wird, und sodann einen Krümmungswechsel durchläuft, d.h. eine Art Horn bildend in einen Teil übergeht, der die beiden Ränder des Reifens miteinander verbindet und bei einer herkömmlichen Felge als Felgenbett bezeichnet würde.

Die beschriebenen Merkmale ermöglichen es, eine sehr leichte und kostengünstig herzustellende Radreifeneinheit zu schaffen, wobei Felge und Radkranz insbesondere in einem Stück aus einer Stahlblechplatine tiefgezogen sein können.

Die Erfindung wird im folgenden anhand zweier in der Zeichnung dargestellter Ausführungsbeispiele näher erläutert. In der Zeichnung zeigen:
- Figur 1 -: eine erste Ausführungsform einer erfindungsgemäßen Radreifeneinheit, und
- Figur 2 -: eine alternative Ausführungsform einer erfindungsgemäßen Radreifeneinheit, bei der eine geänderte Geometrie der Querschnittsform einen besseren Federungskomfort und bessere Handlingseigenschaften gewährleistet.

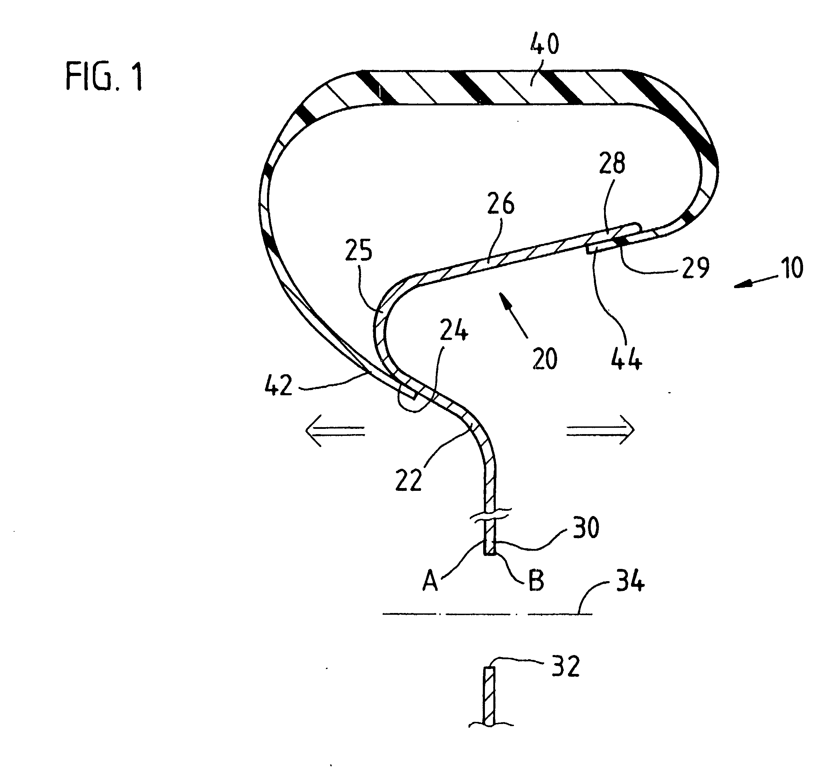

Figur 1 zeigt eine erfindungsgemäße Radreifeneinheit 10, bestehend aus einer Felge 20, die einstückig in einen Radkranz 30 übergeht. Felge 20 und Radkranz 30 sind einstückig als ein Tiefziehteil aus Stahlblech gefertigt. Dies wird durch die spezielle Formgebung der Felge ermöglicht.

Die Felge 20 trägt einen Luftreifen 40 ohne Wulstkerne.

Der Radkranz 30 weist eine Zentrieröffnung 32 zum Aufsetzen auf eine fahrzeugeigene Nabe auf. Das gesamte Rad 10 rotiert um eine in Figur 1 lediglich angedeutete Achse 34. Wie Figur 1 zeigt, ist die schraffiert dargestellte Querschnittsform von Felge 20 und Radkranz 30 als ein unverzweigter Kurvenzug aufzufassen, der symmetrisch zur Achse 34 ist. Die den Querschnitt der Felge beschreibende Kurve ist in Figur 1 in einem Bereich 22 zunächst nach links gekrümmt. Dabei ist der Ausdruck "links" selbstverständlich von der gewählten Blickrichtung und der Lage des Radialschnittes abhängig. Der Querschnitt der Felge führt durch die Linkskrümmung im Bereich 22 zu einer Anlagefläche 24, auf den ein Rand 42 des Luftreifens 40 aufvulkanisierbar ist. Alternativ kann eine Verbindung durch Kleben o.ä. erfolgen.

Die Krümmung der den Querschnitt der Felge beschreibenden Kurve wechselt in einem Bereich 25 die Richtung. In Figur 1 bedeutet dies, daß die Kurve von einem links gekrümmten Bereich 22 in einen rechts gekrümmten Bereich 25, gleichsam S-schlagförmig, übergeht. Ein Bereich 26 ist im wesentlichen ungekrümmt und entspricht dem Felgenbett einer konventionellen Felge. In einem Endbereich 28 des Querschnitts ist eine Anlagefläche 29 gebildet, an der der zweite Rand 44 des Luftreifens 40 anvulkanisiert werden kann. Bemerkenswert ist, daß die Anlagefläche 24 und die Anlagefläche 29 auf unterschiedlichen Seiten A und B der unverzweigten, den Querschnitt der Felge beschreibenden Kurve angeordnet sind.

Die spezielle Formgestaltung der Felge führt zu einer in beide Richtungen der Achse 34 hinterschnittfreien Gestaltung. Durch die beiden zur angedeuteten Achse 34 parallel gezeichneten Pfeile werden die Bewegungsrichtungen eines Gesenkes o.ä. angedeutet, das offensichtlich ohne Einhaken hinter einen Hinterschnitt der tiefzuziehenden Form frei beweglich ist.

Auf diese Weise wird die Produktion von Felgen ermöglicht, die aufgrund ihrer niedrigen Gestehungskosten und des geringen Materialverbrauches für leichte Radreifeneinheiten geeignet sind, bei denen der Luftreifen auf die Felge aufvulkanisiert oder in anderer Form stoffschlüssig verbunden ist.

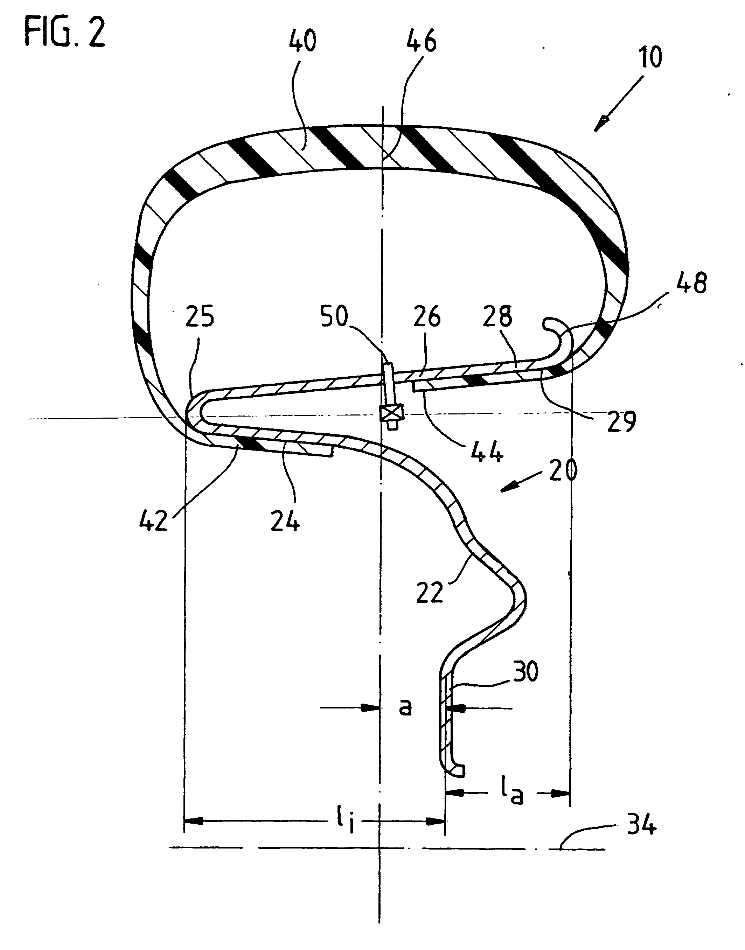

Figur 2 zeigt eine alternative Ausführungsform einer erfindungsgemäßen Radreifeneinheit mit geänderter Geometrie des Felgenquerschnitts. Gleiche Bezugszeichen bezeichnen dabei gleiche Teile wie bei der Ausführungsform gemäß Figur 1.

Der Radkranz 30 als radial innerer Abschnitt ist um ein Maß a gegenüber der Symmetrieebene 46 des Luftreifens 40 versetzt. Dabei wird die Radreifeneinheit vorzugsweise so am Fahrzeug befestigt, daß der Versatz a zur Fahrzeugaußenseite hin zeigt. Auf diese Weise wird in bezug auf der Symmetrieebene 46 des Luftreifens 40 eine Asymmetrie geschaffen, da der aus einer durch den radial inneren Abschnitt 30/Radkranz definierten Ebene zur Fahrzeuginnenseite überkragende Bereich des Felgenquerschnittes größer ist, als der entsprechende zur Fahrzeugaußenseite hin überkragende Bereich des Felgenquerschnitts.

Der weit nach innen überkragende Bereich führt zu einem erhöhten Federungskomfort, während die Handlingeigenschaften des Fahrzeuges verbessert werden, wenn das Maß, um das der Querschnitt über die durch den Radkranz 30 definierte Ebene nach außen überkragt, möglichst klein ist. Es ist mit anderen Worten das in Figur 2 eingezeichnete Maß lₐ kleiner als das entsprechende Maß lᵢ für die Fahrzeuginnenseite.

Weiterhin ist bei der Ausführungsform gemäß Figur 2 eine Abrollfläche 48 vorgesehen, die dadurch erzeugt wird, daß der Querschnitt der Felge im Endbereich 28 zum Inneren des Luftreifens 40 hin gekrümmt ist. Das so gebildete Horn verhindert ein Durchschneiden oder Durchstoßen der Seitenwand des Luftreifens 40 bei Luftverlust oder extremen Belastungszuständen, beispielsweise beim Überfahren einer Bordsteinkante.

Ein Luftventil 50 zum Befüllen des Luftreifens 40 ist vorzugsweise in einem Bereich des Felgenbettes 26 angeordnet, der nicht von aufgeklebten oder aufvulkanisierten Randbereichen des Luftreifens 40 überdeckt ist.

### Bezugszeichenliste

- 10: Radreifeneinheit
- 20: Felge
- 24: Anlagefläche (für 42)
- 25: zweiter Krümmungsbereich
- 26: Felgenbett
- 28: Endbereich
- 29: Anlagefläche (für 44)
- 30: Radkranz
- 32: Zentrieröffnung
- 34: Achse
- 40: Luftreifen
- 42: erster Rand (von 40)
- 44: zweiter Rand (von 40)
- 46: Symmetrieebene (von 40)
- 48: Horn, Abrollfläche
- 50: Ventil
- a: Versatz
- lᵢ: Überkragung innen
- lₐ: Auskragung außen

## Patentansprüche

1. Radreifeneinheit (10), mit einem Luftreifen (40) ohne Wulstkerne und einer Felge (20), wobei die Ränder (42, 44) des Reifens mit der Felge stoffschlüssig, insbesondere durch Aufvulkanisieren, verbunden sind, und die Felge (20) zumindest teilweise in einen Radkranz (30) übergeht,
**dadurch gekennzeichnet, dass**
- Felge und Radkranz einstückig ausgeführt sind und jeder Radialschnitt eine unverzweigte Kurve ist, deren Krümmungen (22, 25) so gewählt sind, dass die Felgen-Radkranz-Einheit zu keiner der beiden Achsrichtungen Hinterschnitte aufweist,
- die Ränder (42, 44) des Reifens auf unterschiedlichen Seiten (A, B) der unverzweigten, den Querschnitt der Felge (20) beschreibenden Kurve aufvulkanisiert oder geklebt sind,
- die Ränder (42, 44) des Reifens in Axialrichtung hinter die Reifenschultem zurückspringen.

2. Radreifeneinheit nach Anspruch 1, **dadurch gekennzeichnet, dass** ein Rand (44) des Luftreifens in einem Endbereich (28) der den Querschnitt der Felge beschreibenden Kurve aufvulkanisiert oder geklebt ist.

3. Radreifeneinheit nach einem der vorhergehenden Ansprüche, **dadurch gekennzeichnet, dass** die den Querschnitt der Felge beschreibenden Kurve von einem radial inneren Abschnitt (30) nach außen hin betrachtet zunächst in eine Richtung (22) gekrümmt ist und dann einen Krümmungswechsel (25) durchläuft.

4. Radreifeneinheit nach Anspruch 3, **dadurch gekennzeichnet, dass** der radial innere Abschnitt (30) um einen Versatz (a) aus der Symmetrieebene des Reifens (40) versetzt ist.

5. Radreifeneinheit nach Anspruch 4, **dadurch gekennzeichnet, dass** der Versatz (a) von der Symmetrieebene (46) des Luftreifens (10) zur Fahrzeugaußenseite hin angeordnet ist.

6. Radreifeneinheit nach Anspruch 2, **dadurch gekennzeichnet, dass** der Endbereich (28) der den Querschnitt der Felge beschreibenden Kurve eine Abrollfläche (48) bilden zum Inneren des Luftreifens (10) hin gekrümmt ist.

7. Radreifeneinheit nach einem der vorhergehenden Ansprüche, **dadurch gekennzeichnet, dass** Felge (20) und Radkranz (30) in einem Stück aus einer Stahlblechplatine tiefgezogen sind.

8. Radreifeneinheit nach einem der Ansprüche 1 bis 3, **dadurch gekennzeichnet, dass** Felge (20) und Radkranz (30) einstückig aus einem faserverstärkten Kunststoff gefertigt sind.

## Claims

1. Tyre unit (10), having a pneumatic tyre (40), without bead cores, and a rim (20), the edges (42, 44) of the tyre being chemically connected to the rim, especially by means of vulcanisation, and the rim (20) merging at least partially into a wheel disc (30),
**characterised in that**
- rim and wheel disc are formed as one piece and each radial cross-section is a non-branching curve, the curvatures (22, 25) of which are so selected that the rim and wheel disc unit has no undercuts in either axial direction,
- the edges (42, 44) of the tyre on different sides (A,B) of the non-branching curve which describes the cross-section of the rim (20) are vulcanised or glued on,
- the edges (42,44) of the tyre stand back in an axial direction behind the tyre shoulders.

2. Tyre unit according to claim 1, **characterised in that** an edge (44) of the pneumatic tyre is vulcanised or glued on in an end region (28) of the curve which describes the cross-section of the rim.

3. Tyre unit according to one of the preceding claims, **characterised in that** the curve which describes the cross-section of the rim is curved initially in one direction (22) from a radially inner portion (30), when viewed towards the outside, and then undergoes a change of curvature (25).

4. Tyre unit according to claim 3, **characterised in that** the radially inner portion (30) is offset by an amount (a) from the plane of symmetry of the tyre (40).

5. Tyre unit according to claim 4, **characterised in that** the offset (a) from the plane of symmetry (46) of the pneumatic tyre (10) is arranged towards the outside of the vehicle.

6. Tyre unit according to claim 2, **characterised in that** the end region (28) of the curve which describes the cross-section of the rim is curved towards the inside of the pneumatic tyre (10) forming a rolling surface (48).

7. Tyre unit according to one of the preceding claims, **characterised in that** rim (20) and wheel disc (30) are deep-drawn in one piece from a sheet steel plate.

8. Tyre unit according to one of claims 1 to 3, **characterised in that** rim (20) and wheel disc (30) are produced as one piece from a fibre-reinforced plastic.

## Revendications

1. Unité pneumatique-roue (10), comprenant un pneumatique (40) sans tringles de talons et une jante (20), les bords (42, 44) du pneumatique étant reliés à la jante par une liaison à continuité de matière, notamment par vulcanisation, et la jante (20) se raccordant au moins partiellement à un voile ou corps de roue (30),
**caractérisée en ce que**
- la jante et le voile de roue sont réalisés d'un seul tenant et chaque coupe radiale est une courbe non ramifiée, dont les courbures (22, 25) sont choisies de façon telle, que l'unité jante-voile de roue ne présente pas de contre-dépouilles relativement à aucune des deux directions d'axes,
- les bords (42, 44) du pneumatique sont vulcanisés ou collés sur deux côtés (A, B) différents de la courbe non ramifiée décrivant la section transversale de la jante (20),
- les bords (42, 44) du pneumatique sont placés en retrait derrière les flancs du pneumatique, dans la direction axiale.

2. Unité pneumatique-roue selon la revendication 1, **caractérisée en ce qu'**un bord (44) du pneumatique est vulcanisé ou collé sur une zone terminale (28) de la courbe décrivant la section transversale de la jante.

3. Unité pneumatique-roue selon l'une des revendications précédentes, **caractérisée en ce que** la courbe décrivant la section transversale de la jante, vu à partir d'un tronçon radialement intérieur (30) vers l'extérieur, est tout d'abord courbée dans une direction (22), puis subit ensuite une inversion de courbure (25).

4. Unité pneumatique-roue selon la revendication 3, **caractérisée en ce que** le tronçon radialement intérieur (30) est déporté d'un décalage (a) hors du plan de symétrie du pneumatique (40).

5. Unité pneumatique-roue selon la revendication 4, **caractérisée en ce que** le décalage (a) par rapport au plan de symétrie (46) du pneumatique (40) est placé en direction du côté extérieur du véhicule.

6. Unité pneumatique-roue selon la revendication 2, **caractérisée en ce que** la zone terminale (28) de la courbe décrivant la section transversale de la jante, est courbée vers l'intérieur du pneumatique (40) en formant une surface de déroulement (48).

7. Unité pneumatique-roue selon l'une des revendications précédentes, **caractérisée en ce que** la jante (20) et le voile de roue (30) sont fabriquées par emboutissage profond en une partie, à partir d'une platine de tôle d'acier.

8. Unité pneumatique-roue selon l'une des revendications 1 à 3, **caractérisée en ce que** la jante (20) et le voile de roue (30) sont fabriqués d'un seul tenant en une matière plastique renforcée de fibres.
